# EUROPÄISCHE PATENTANMELDUNG

(11) **EP 3 541 023 A1**
(43) Veröffentlichungstag der Anmeldung: **18.09.2019**
(21) Anmeldenummer: 18161488.4
(22) Anmeldetag: 13.03.2018
(51) Int. Cl.: H04L 12/28, H04L 12/40, H04L 12/46, G05B 17/02, G05B 19/042

(54) **KOMMUNIKATIONSVORRICHTUNG FÜR EIN AUTOMATISIERUNGSSYSTEM**

(71) Anmelder: Siemens Aktiengesellschaft, 80333 München (DE)
(72) Erfinder: Bergs, Christoph, 80336 München (DE); Held, Harald, 85461 Bockhorn (DE)

(57) **Zusammenfassung**

Die Erfindung betrifft eine Kommunikationsvorrichtung für ein Automatisierungssystem, das ein Rechensystem (21) in einer Cloud (20) und zumindest eine technische Komponente (31) in einem Kernnetzwerk des Automatisierungssystems umfasst. Die Kommunikationsvorrichtung ist dazu eingerichtet, Daten von der technischen Komponente (31) an einer Feldbus-Schnittstelle (11) zu empfangen, zu konvertieren und die konvertierten Daten über eine IP-basierte Schnittstelle (12) an das Rechensystem (21) weiterzuleiten. Eine Empfangsschnittstelle (15) empfängt in vorgegebenen Zeitabständen Messdaten von der technischen Komponente (31), die den aktuellen Zustand der technischen Komponente (31) charakterisieren. Die Messdaten einer Vielzahl von Messungen wird in einem Datenspeicher (13) gespeichert. Eine Recheneinheit (14) ermittelt aus den in dem Datenspeicher (13) gespeicherten Messdaten und einem vorab bestimmten, datengetriebenen Modell der technischen Komponente (31) einen oder mehrere Parameter (pᵢ) einer zur Steuerung der technischen Komponente (31) geeigneten Betriebskurve, die den aktuellen technischen Zustand der technischen Komponente (31) wiederspiegelt. Der oder die Parameter (pᵢ) werden über den Feldbus an die technische Komponente (31) zu Steuerungszwecken und an das Rechensystem (21) zur Durchführung eines Optimierungsalgorithmus für mehrere der technischen Komponenten (31) des Automatisierungssystems übertragen.

## Beschreibung

Die Erfindung betrifft eine Kommunikationsvorrichtung für ein Automatisierungssystem sowie ein Verfahren zum Betreiben einer derartigen Kommunikationsvorrichtung.

Eine Kommunikationsvorrichtung kommt z.B. in einem Automatisierungssystem zum Einsatz, das ein Rechensystem in einem Cloud Computing-System und zumindest eine technische Komponente in einem Kernnetzwerk des Automatisierungssystems umfasst, um Daten von der technischen Komponente an das Rechensystem zu übertragen. Die Kommunikationsvorrichtung ist daher dazu eingerichtet, Daten von der technischen Komponente an einer ersten Schnittstelle, die an einen Feldbus eines Kernnetzes des Automatisierungssystems angeschlossen ist, zu empfangen, zu konvertieren und die konvertierten Daten über eine zweite Schnittstelle, die auf einem generischen Netzwerkprotokoll basiert, an das Rechensystem weiterzuleiten.

Eine solche Kommunikationsvorrichtung wird auch als Edge-Device bezeichnet. Ein Edge-Device ist eine Netzwerkkomponente, die sich am Rand eines Netzwerks - des Kernnetzwerks des Automatisierungssystems - befindet, um für den Zugang zu dem Kernnetz des Automatisierungssystems von außerhalb des Kernnetzes zu sorgen. Edge-Devices übertragen im Internet der Dinge (englisch: Internet of Things, IoT) Datenpakete zwischen den verschiedenen Kommunikationsnetzen. Edge Devices verfügen zur Durchführung ihrer Kommunikationsaufgaben in der Regel über eine Recheneinheit, um einfachere Rechenaufgaben zu übernehmen, wie z.B. Daten der technischen Komponente aus dem Kernnetzwerk zu komprimieren, und so die enorme Datenmenge der technischen Komponente zu reduzieren. Nach einer Konvertierung der, z.B. komprimierten, Daten in ein anderes Datenübertragungsformat werden diese dann über ein anderes Netzwerkprotokoll an das Cloud Computing-System übertragen.

Unter einem Cloud Computing-System, auch einfach Cloud genannt, wird in der Informationstechnik ein Rechenzentrum mit breitbandigem Netzwerkanschluss, hoher Rechenleistung und großem Massenspeicher verstanden. Eine Cloud stellt einen virtuellen Speicherraum dar, in dem Daten, Dateien und Programme abgelegt und von einem oder mehreren Benutzern mit entsprechender Autorisierung bearbeitet werden können. Clouds sind virtuelle Ablagen, deren Bestimmungsort nicht identifizierbar ist. Die in der Cloud abgelegten Dateien und Programme können mittels Cloudcomputing ausgeführt und deren Ergebnisse wiederum in der Cloud abgelegt werden. In der Cloud selbst befinden sich Programme und auch die Hardware für das Cloudcomputing in Form von Cloud-Servern.

Ein Automatisierungssystem kann eine Vielzahl an technischen Komponenten enthalten. Die Steuerung einer jeweiligen technischen Komponente erfolgt durch eine lokale Steuereinheit, z.B. eine PLC (Programmable Logic Controller). Hierzu sind in der lokalen Steuereinheit Steueralgorithmen und/oder Steuerkommandos und/oder Steuerkurven hinterlegt, um situationsabhängig eine vorgegebene Steuerung vornehmen zu können. Beispielsweise erfolgt bei einer Pumpe als technische Komponente die Steuerung des (Pumpen-)Motors mit Hilfe sog. Betriebskurven, welche die Drehzahl abhängig von einer gewünschten Eingangsgröße regelt. Eine oder mehrere derartiger Betriebskurven sind beispielsweise experimentell vom Hersteller der technischen Komponente bestimmt. Dabei gelten der oder die Betriebskurve oder Betriebskurven für bestimmte Betriebsbedingungen. Liegen beim Betrieb der technischen Komponente andere Betriebsbedingungen vor, kann durch die Steuereinheit eine Anpassung der Betriebskurve oder Betriebskurven an die Betriebsbedingungen vorgenommen werden.

Die Betriebskurve(n) werden für einen optimierten Betrieb der technischen Komponente benötigt, z.B. um einen Betrieb mit optimalem Wirkungsgrad und damit geringstmöglichem Energieeinsatz zu erzielen. Dies ist durch die Anpassung der Betriebskurven, die auf Erfahrungswerten des Herstellers und/oder des Betreibers des Automatisierungssystems basiert, jedoch nur teilweise möglich. Beispielsweise führt ein Verschleiß zu einer nicht bekannten Verschlechterung der technischen Komponente. Bislang wird diese Verschlechterung durch einen linearen Faktor bei der oder den Betriebskurven, z.B. in Abhängigkeit der Betriebsdauer, berücksichtigt. Abhängig von den zugrunde gelegten linearen Faktoren, die auf Erfahrungswerten basieren, stellt die dann genutzte Betriebskurve eine mehr oder minder genaue Abbildung des tatsächlichen Zustands der technischen Komponente dar.

Die Kommunikationsvorrichtung dient, wie beschrieben, dazu, die an der technischen Komponente anfallenden Daten, wie z.B. Prozessdaten, Messdaten und dergleichen, über einen Feldbus des Kernnetzes an seiner ersten Schnittstelle zu empfangen, zu konvertieren und die konvertierten Daten über die zweite Schnittstelle an das Rechensystem in dem Cloud Computing-System weiterzuleiten. Die Daten sämtlicher technischer Komponenten des Automatisierungssystems können dann durch das Rechensystem in dem Cloud Computing-System aggregiert und verarbeitet werden. Es kann z.B. ein optimiertes Betriebsverfahren für die Gesamtheit aller technischen Komponenten des Automatisierungssystems ermittelt werden. Ob die ermittelte Betriebsstrategie dann durch die technischen Komponenten umgesetzt wird, obliegt typischerweise der Entscheidung eines Nutzers, der die technischen Komponenten überwacht.

Es wäre wünschenswert, die technische Komponente, unabhängig von ihrem tatsächlichen Verschleißzustand, immer optimal betreiben zu können. Dies würde auch in einem Automatisierungssystem mit einer Vielzahl an technischen Komponenten einen optimierten Betrieb über alle technischen Komponenten betrachtet ermöglichen.

Es ist Aufgabe der vorliegenden Erfindung, eine Kommunikationsvorrichtung und ein Verfahren zum Betrieb einer Kommunikationsvorrichtung anzugeben, welche einen präziseren Betrieb der technischen Komponente eines Automatisierungssystems ermöglichen.

Eine weitere Aufgabe der Erfindung besteht darin, in einem Automatisierungssystem mit einer Vielzahl an technischen Komponenten, einen optimierten Betrieb über alle technischen Komponenten zu ermöglichen.

Diese Aufgaben werden gelöst durch eine Kommunikationsvorrichtung gemäß den Merkmalen des Patentanspruchs 1, ein Verfahren gemäß den Merkmalen des Patentanspruchs 9 und ein Computerprogrammprodukt gemäß den Merkmalen des Patentanspruchs 10 gelöst. Vorteilhafte Ausgestaltungen ergeben sich aus den abhängigen Patentansprüchen.

Es wird eine Kommunikationsvorrichtung für ein Automatisierungssystem vorgeschlagen, das ein Rechensystem in einem Cloud Computing-System und zumindest eine technische Komponente in einem Kernnetzwerk des Automatisierungssystems umfasst. Die Kommunikationsvorrichtung ist dazu eingerichtet, Daten von der technischen Komponente an einer ersten Schnittstelle, die an einen Feldbus des Kernnetzes angeschlossen ist, zu empfangen, zu konvertieren und die konvertierten Daten über eine zweite Schnittstelle, die auf einem generischen Netzwerkprotokoll basiert, an das Rechensystem weiterzuleiten.

Die Kommunikationsvorrichtung umfasst ferner eine Empfangsschnittstelle, die dazu eingerichtet ist, in vorgegebenen Zeitabständen ein jeweiliges Signal von der technischen Komponente zu empfangen, wobei ein jeweiliges Signal Messdaten umfasst, die den aktuellen Zustand der technischen Komponente charakterisieren. Weiter umfasst die Kommunikationsvorrichtung einen Datenspeicher, der dazu eingerichtet ist, die in den jeweiligen Signalen enthaltenen Messdaten in dem Datenspeicher zu speichern. Die Kommunikationsvorrichtung umfasst ferner eine Recheneinheit, die dazu eingerichtet ist, aus den in dem Datenspeicher gespeicherten Messdaten und einem vorab bestimmten datengetriebenen Modell der technischen Komponente einen oder mehrere Parameter einer zur Steuerung der technischen Komponente geeigneten Betriebskurve, die den aktuellen technischen Zustand der technischen Komponente wiederspiegelt, zu ermitteln. Schließlich umfasst die Kommunikationsvorrichtung eine Kommunikationseinheit, die dazu eingerichtet ist, den oder die Parameter an die technische Komponente zu Steuerungszwecken und an das Rechensystem zur Durchführung eines Optimierungsalgorithmus für mehrere der technischen Komponenten des Automatisierungssystems zu übertragen.

Es wird ferner ein Verfahren zum Betreiben einer Kommunikationsvorrichtung für ein Automatisierungssystem vorgeschlagen, das ein Rechensystem in einem Cloud Computing-System und zumindest eine technische Komponente in einem Kernnetzwerk des Automatisierungssystems umfasst, wobei die Kommunikationsvorrichtung dazu eingerichtet ist, Daten von der technischen Komponente an einer ersten Schnittstelle, die an einen Feldbus des Kernnetzes angeschlossen ist, zu empfangen, zu konvertieren und die konvertierten Daten über eine zweite Schnittstelle, die auf einem generischen Netzwerkprotokoll basiert, an das Rechensystem weiterzuleiten.

Das Verfahren umfasst die folgenden Schritte: Empfangen, in vorgegebenen Zeitabständen, eines jeweiligen Signals von der technischen Komponente an einer Empfangsschnittstelle, wobei ein jeweiliges Signal Messdaten umfasst, die den aktuellen Zustand der technischen Komponente charakterisieren; Speichern der in den jeweiligen Signalen enthaltenen Messdaten in einem Datenspeicher; Ermitteln eines oder mehrerer Parameter einer zur Steuerung der technischen Komponente geeigneten Betriebskurve aus den in den Datenspeicher gespeicherten Messdaten und einem vorab bestimmten, datengetriebenen Modell der technischen Komponente, wobei die Betriebskurve den aktuellen technischen Zustand der technischen Komponente wiederspiegelt; Übertragen des oder der Parameter an die technische Komponente zu Steuerungszwecken und an das Rechensystem zur Durchführung eines Optimierungsalgorithmus für mehrere der technischen Komponenten des Automatisierungssystems.

Durch das vorgeschlagene Vorgehen wird es auf einfache Weise möglich, mit Hilfe eines vorab bestimmten datengetriebenen Modells der technischen Komponente eine aktuelle Betriebskurve, die den aktuellen technischen Zustand der technischen Komponente wiederspiegelt, zu ermitteln. Diese kann der technischen Komponente zu deren Steuerung und ihrem Betrieb aktuelle Betriebskurven zur Verfügung gestellt werden. Die Ermittlung der aktuellen Betriebskurve erfolgt durch die technische Komponente selbst anhand der ihr zur Verfügung gestellten Parameter. Dadurch ist es lediglich erforderlich, den oder die Parameter über den Feldbus zu übertragen.

Ferner können der oder die zur Bestimmung der aktualisierten Betriebskurve erforderlichen Parameter auch an das Rechensystem in dem Cloud Computing-System übertragen werden, wobei die Übertragung über ein generisches Netzwerkprotokoll, z.B. das Internet Protocol, erfolgt. Das Rechensystem, welches entsprechende Parameter von einer Vielzahl von technischen Komponenten enthält erhält, kann dann zunächst die aktuellen Betriebskurven und dann mit Hilfe eines Optimierungsalgorithmus ermitteln, welche der technischen Komponenten mit welcher der aktuellen Betriebskurven in dem Automatisierungssystem zur Erfüllung einer Automatisierungsaufgabe idealerweise genutzt werden. Ob der durch das Rechensystem durchgeführte Optimierungsalgorithmus letztendlich auf die lokalen Steuereinheiten der technischen Komponenten übertragen wird, kann automatisiert oder aber durch einen erfahrenen Nutzer (Operator) entschieden werden.

Dadurch, dass die in einem Datenspeicher der Kommunikationsvorrichtung gespeicherten Messdaten durch die Kommunikationsvorrichtung selbst verarbeitet werden, brauchen für die Bestimmung aktualisierter Betriebskurven und einer optimierten Betriebsstrategie des gesamten Automatisierungssystems keine getrennten Berechnungen durch die technische Komponenten einerseits und das Rechensystem andererseits vorgenommen werden. Vielmehr wird die in der Kommunikationsvorrichtung vorhandene Rechenleistung der Recheneinheit genutzt.

Darüber hinaus ist es nicht notwendig, für die Bestimmung aktualisierter Betriebskurven sowie einer Betriebsstrategie für eine Vielzahl von technischen Komponenten des Automatisierungssystems unterschiedliche Datenmodelle zu entwickeln und zu pflegen. Vielmehr kann ein einmal vorab bestimmtes, datengetriebenes Modell erzeugt und in der Kommunikationsvorrichtung hinterlegt werden. Die Bestimmung des datengetriebenen Modells kann in einer dem Fachmann bekannten Weise durch die Erfassung einer großen Anzahl an Trainingsdaten und einer anschließenden Simulation von Betriebskurven erfolgen. Dabei wird eine künstliche Datenbasis für die herstellerseitig vorgegebenen Betriebskurven sowie die modifizierten Betriebskurven entsprechend eines Verschleißmodells bestimmt. Das datengetriebene Modell kann dann dazu genutzt werden, um aus den in dem Datenspeicher gespeicherten Messdaten einen oder mehrere Parameter der zur Steuerung der technischen Komponente geeigneten Betriebskurve zu bestimmen.

Gemäß einer zweckmäßigen Ausgestaltung umfasst das Signal während des Betriebs der technischen Komponente zu einem Zeitpunkt erfasste Messdaten. Die Messdaten können abhängig von der Art und dem Typ der technischen Komponente unterschiedlich sein. Bei einem Aktor, wie z.B. einem Elektromotor, können beispielsweise Strom, Spannung, cos ϕ, die aufgenommene Leistung, die Drehzahl des Elektromotors, die Umgebungstemperatur, Viskosität und Dichte eines z.B. geförderten Fluids, und dergleichen erfasst werden. Mit Hilfe der zu einem Zeitpunkt erfassten Messdaten ist es möglich, einen Betriebspunkt einer aktuellen Betriebskurve zu schätzen. Wird eine Vielzahl an Messdaten erfasst, insbesondere bei unterschiedlichen Betriebsbedingungen, so kann die aktuelle Betriebskurve mit Hilfe des vorab bestimmten, datengetriebenen Modells ermittelt werden.

Es ist daher zweckmäßig, wenn der Datenspeicher dazu eingerichtet ist, die Messdaten von Signalen innerhalb eines vorgegebenen Zeitraums zu speichern. Der vorgegebene Zeitraum kann, abhängig von der technischen Komponente, unterschiedlich lang sein. Beispielsweise kann der Erfassungszeitraum mehrere Stunden, einen oder mehrere Tage, usw. betragen, wobei eine Erfassung z.B. alle fünf, zehn oder 30 Minuten erfolgt.

Es ist weiterhin zweckmäßig, wenn die Recheneinheit dazu eingerichtet ist, den oder die Parameter aus einer Vielzahl von Messdaten zu ermitteln, die in dem vorgegebenen Zeitraum erfasst sind. Zweckmäßigerweise sind der oder die Parameter Parameter eines Polynoms zur Beschreibung der Betriebskurve der technischen Komponente. Hierdurch kann durch die Übertragung nur weniger Parameter an die technische Komponente und das Rechensystem in dem Cloud Computing-System jeweils durch diese selbst anhand der Parameter die aktualisierte Betriebskurve ermittelt werden. Beispielsweise kann die Betriebskurve der technischen Komponente durch ein kubisches Polynom, zu dessen Definition vier Parameter erforderlich sind, bestimmt werden. Abhängig von der Anzahl der zum Betrieb der technischen Komponente erforderlichen Betriebskurven kann die Anzahl der Parameter auch höher oder niedriger sein.

Es ist weiterhin zweckmäßig, wenn die Kommunikationsvorrichtung ein Edge-Device ist, wie dieses eingangs beschrieben wurde.

Während die erste Schnittstelle eine Schnittstelle eines Feldbusses, wie z.B. Profinet, ist, handelt es sich bei der zweiten Schnittstelle um eine Ethernet-basierte Schnittstelle, so dass eine Kommunikation zwischen der Kommunikationsvorrichtung und dem Cloud Computing-System mit Hilfe von IP-Paketen ermöglicht ist.

Es ist weiterhin zweckmäßig, wenn die Empfangsschnittstelle der ersten Schnittstelle entspricht.

Die Erfindung schlägt ferner ein Computerprogrammprodukt vor, dass direkt in den internen Speicher eines digitalen Rechners geladen werden kann und Softwarecodeabschnitte umfasst, mit denen die Schritte des hierin beschriebenen Verfahrens ausgeführt werden, wenn das Produkt auf einem Rechner läuft. Das Computerprogrammprodukt kann in Gestalt eines Datenträgers, wie z.B. einer CD-ROM, einer DVD, einem USB-Speicherstick und dergleichen ausgebildet sein. Ebenso kann das Computerprogrammprodukt ein über ein kontaktloses oder leitungsbehaftetes Kommunikationsnetzwerk ladbares Signal sein.

Weitere Merkmale und Ausgestaltungen der vorliegenden Erfindung werden nachfolgend anhand der Beschreibung der Zeichnungen erläutert. Es zeigen:
- Fig. 1: eine schematische Darstellung eines Automatisierungssystems, das eine erfindungsgemäße Kommunikationsvorrichtung und beispielhaft eine technische Komponente umfasst; und
- Fig. 2: eine schematische Darstellung eines Ablaufplans des erfindungsgemäßen Verfahrens zum Betreiben einer Kommunikationsvorrichtung.

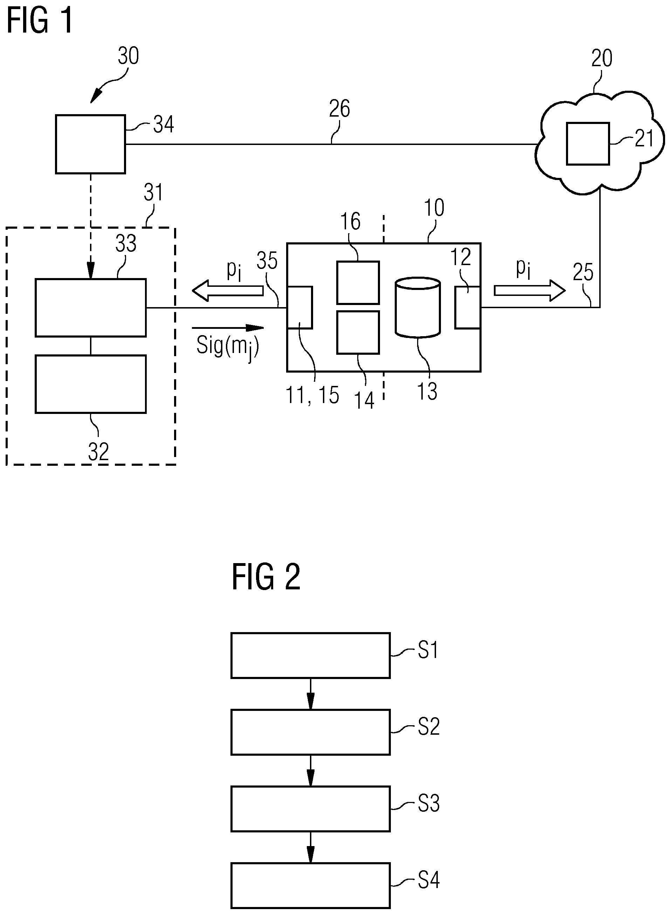

Fig. 1 zeigt eine schematische Darstellung eines Automatisierungssystems, in dem eine erfindungsgemäße Kommunikationsvorrichtung 10 zum Einsatz kommt. Das Automatisierungssystem 10 umfasst in der Darstellung der Einfachheit halber lediglich eine technische Komponente 30 sowie ein Cloud Computing-System 20. In der Praxis verfügt das Automatisierungssystem 10 über eine Vielzahl an gleichen und/oder unterschiedlichen technischen Komponenten. Die erfindungsgemäße Kommunikationsvorrichtung 10 ermöglicht es, Daten von der technischen Komponente 30 an ein Rechensystem 21 des Cloud Computing-Systems 20 zu übertragen. In der Praxis kann eine Mehrzahl an technischen Komponenten über die Kommunikationsvorrichtung 10 Daten an das Rechensystem 21 des Cloud Computing-Systems 20 übertragen. Alternativ kann das Automatisierungssystem auch über eine Mehrzahl an Kommunikationsvorrichtungen 10 verfügen, wobei an eine jeweilige Kommunikationsvorrichtung 10 ein oder mehrere technische Komponenten zum Übertragen von Daten an das Cloud Computing-System 20 angeschlossen sein können. Lediglich aus Gründen der einfacheren Beschreibung wird nachfolgend auf die in Fig. 1 gezeigte, einzige technische Komponente Bezug genommen.

Bei dem Automatisierungssystem kann es sich beispielsweise um ein Pumpensystem mit einer Vielzahl an Pumpenstationen handeln, wobei jede Pumpenstation eine vorgegebene Anzahl an Pumpen umfasst. Die Pumpe entspricht einer technischen Komponente im Sinne der vorliegenden Erfindung. Jede der Pumpen wird mit Hilfe einer oder mehrerer sog. Pumpenkurven betrieben, die Betriebskurven im Sinne der vorliegenden Erfindung darstellen. Die Betriebskurven werden beispielsweise durch kubische Polynome definiert. Als Betriebskurven einer Pumpe werden beispielsweise eine Druck-Fluss (p-Q)-Kurve und eine Effizienz-Fluss (*η*-Q)-Kurve verwendet. Zur Beschreibung der beiden Betriebskurven sind somit für jede Pumpe insgesamt acht Parameter (je vier pro kubischem Polynom) erforderlich.

Nenn-Betriebskurven der Pumpen werden durch einen Hersteller der Pumpe experimentell, Z.B. für Wasser als zu förderndes Fluid, bestimmt. Da beim Betrieb der Pumpen Abweichungen im Hinblick auf die experimentelle Bestimmung auftreten können, z.B. aufgrund einer unterschiedlichen Viskosität und/oder Dichte des geförderten Fluids, werden die Betriebskurven beim Betrieb durch Erfahrungsparameter angepasst. Durch einen linearen Faktor wird auch ein Verschleiß aufgrund einer Verschlechterung der Pumpenleistung berücksichtigt, wobei der lineare Faktor beispielsweise in Abhängigkeit der Betriebsdauer variiert wird. Diese Variation basiert auf Erfahrungen.

Die Pumpen einer Pumpenstation sind z.B. seriell mit einem Bypass verschaltet, um in Abhängigkeit des Betriebs einer (beliebigen) Teilanzahl der Pumpen einen gewünschten Druckunterschied zwischen dem zu fördernden Fluid am Eingang und am Ausgang der Pumpenstation herstellen zu können. Abhängig vom technischen Zustand, z.B. deren Verschleiß, kann es zweckmäßig sein, bestimmte Pumpen einer Pumpenstation in bestimmter Weise zu betreiben und andere nicht zu nutzen, um die Pumpenstation mit größtmöglicher Effizienz zu betreiben.

Die in Fig. 1 gezeigte technische Komponente 31 umfasst neben dem exemplarisch als Pumpe beschriebenen Aktor 32 eine lokale Steuereinheit 33. Ein Leitrechner 34 ermöglicht es einem Nutzer (auch als Operator bezeichnet) in der lokalen Steuereinheit 33 die zur Steuerung hinterlegte(n) Betriebskurven zu variieren, adaptieren oder aus einer Vielzahl zur Verfügung stehenden Betriebskurven eine zur Steuerung des Aktors 32 geeignete Betriebskurve auszuwählen. Der Leitrechner 34 kann mehreren technischen Komponenten 31 zugeordnet sein. Die technische Komponente 31 und der Leitrechner 34 stellen eine "erweiterte" technische Komponente dar und werden als Komponenteneinheit 30 bezeichnet.

Die Kommunikation zwischen der technischen Komponente 31 und der Kommunikationsvorrichtung 10 erfolgt über einen Feldbus 35, z.B. Profinet. Über den Feldbus 35 kann die Kommunikationsvorrichtung Daten von der technischen Komponente 31 (bzw. deren lokaler Steuereinheit 33) empfangen und Daten an die technische Komponente 31 übertragen. Der Feldbus 35 ist dabei an eine erste Schnittstelle 11 der Kommunikationsvorrichtung 10 angeschlossen.

Über eine zweite Schnittstelle 12 der Kommunikationsvorrichtung 10 kann die Kommunikationsvorrichtung 10 Daten an das Rechensystem 21 des Cloud Computing-Systems 20 übertragen. Die dazu verwendete Kommunikationsleitung 25, die drahtlos oder drahtgebunden sein kann, ermöglicht lediglich eine (unidirektionale) Übertragung von Daten von der Kommunikationsvorrichtung 10 zu dem Cloud Computing-System 20. Die unidirektionale Kommunikation erfolgt aus Sicherheitsgründen, da die Kommunikationsleitung 25 vorzugsweise auf einem generischen Kommunikationsprotokoll, insbesondere IP-basiert, kommuniziert und gegenüber Angriffen und Fehlern anfällig ist.

Das Cloud Computing-System 20 ist über eine weitere Kommunikationsleitung 26, die drahtlos oder drahtgebunden ausgebildet sein kann, mit dem Leitrechner 34 der Komponenteneinheit 30 verbunden. Die zwischen dem Leitrechner 34 und der lokalen Steuereinheit 33 mit einem gestrichelten Pfeil eingezeichnete Kommunikation stellt keine Kommunikationsleitung im eigentlichen Sinne dar, sondern symbolisiert lediglich einen möglichen, nutzergeführten Eingriff auf die lokale Steuereinheit 33 mittels des Leitrechners 34.

Die Kommunikationsvorrichtung 10 verfügt über die erste und die zweite Schnittstelle 11, 12 darüber hinaus über einen Datenspeicher 13, eine Recheneinheit 14 und eine Kommunikationseinheit 16. Die Kommunikationseinheit 16 ist dazu eingerichtet, von der Recheneinheit 14 bestimmte Daten zum Aussenden an die erste und die zweite Schnittstelle 11, 12 zu übergeben.

Nachfolgend wird die Funktion des in Fig. 1 beschriebenen Automatisierungssystems näher erläutert.

Gemäß der vorliegenden Erfindung werden die von der lokalen Steuereinheit 33 verarbeiteten Betriebskurven der technischen Komponente 31 nicht basierend auf Erfahrung mit Hilfe von linearen Faktoren geschätzt, sondern basierend auf, den aktuellen Zustand der technischen Komponente repräsentierenden, Messdaten ermittelt. Zu diesem Zweck ist die technische Komponente 31 mit in Fig. 1 nicht näher dargestellten Sensoren versehen, die abhängig von der Art und dem Typ der technischen Komponente verschiedene Messwerte erfassen.

In dem eingangs genannten Beispiel einer Pumpe werden beispielsweise die von der Pumpe aufgenommene Leistung anhand der Messung des Motorstroms, der Motorspannung und des Winkels cos ϕ, der Drehzahl, des Flusses, der Dichte und Viskosität des geförderten Fluids sowie der Umgebungstemperatur ermittelt. Darüber hinaus können andere, weniger oder mehr Messwerte ermittelt werden. Die Messdaten werden zum gleichen Zeitpunkt erfasst und in einem Signal Sig(mⱼ) an die Kommunikationsvorrichtung 10 übertragen, wobei der Index j das j-te Signal der zum einem bestimmten Zeitpunkt erfassten Messwerte bezeichnet. Die Kommunikationsvorrichtung 10 empfängt das Signal Sig(mⱼ) mit den Messdaten, die den aktuellen Zustand der technischen Komponente charakterisieren und speichert die Messdaten in dem Datenspeicher 13 ab. Die Erfassung der Messdaten erfolgt in vorgegebenen Zeitabständen, z.B. alle fünf Minuten oder zehn Minuten für einen vorgegebenen Zeitraum. Die entsprechenden Messdaten werden alle in dem Datenspeicher 13 der Kommunikationsvorrichtung 10 gespeichert.

Die Recheneinheit 14 ist dazu eingerichtet, aus den in dem Datenspeicher 13 gespeicherten Messdaten und einem vorab bestimmten, datengetriebenen Modell der technischen Komponente die Parameter pᵢ der Betriebskurve oder -kurven (z.B. der kubischen Polynome) zu bestimmen, wobei die Betriebskurve dann den aktuellen technischen Zustand der technischen Komponente 31 wiederspiegelt.

Das datengetriebene Modell wird mit Hilfe einer großen Anzahl an zuvor gewonnenen Trainingsdaten ermittelt, wobei das Modell durch ein Trainieren mit der künstlich erzeugten Datenbasis erfolgt. Das entsprechende Vorgehen ist dem Fachmann hinlänglich bekannt und wird daher nicht näher erläutert.

Durch das beschriebene Verfahren erfolgt eine "Online"-Schätzung des Verschleißes der technischen Komponente, im vorgenannten Beispiel der Pumpe. Da die Betriebskurven durch die Polynome beschrieben werden können, ist es ausreichend die Parameter pᵢ der Polynome, die durch die Recheneinheit 14 ermittelt werden, über den Feldbus 35 an die lokale Recheneinheit 33 zu übertragen. Die lokale Recheneinheit 33 kann dann anhand der Parameter pᵢ die Betriebskurven ermitteln und diese seiner weiteren Steuerung der technischen Komponente zugrunde zu legen.

Die durch die Recheneinheit 14 der Kommunikationsvorrichtung 10 ermittelten Parameter pᵢ werden ebenso über die Kommunikationsverbindung 25 an das Rechensystem 21 des Cloud Computing-Systems übertragen. Damit stehen dem Rechensystem 21 die Parameter pᵢ zur Ermittlung der aktuellen Betriebskurve der technischen Komponente 31 ebenfalls zur Verfügung. Da, wie eingangs erläutert, das Automatisierungssystem eine Vielzahl an technischen Komponenten umfasst, können die entsprechenden Parameter pᵢ der weiteren technischen Komponenten ebenfalls von dem Rechensystem 21 des Cloud Computing-Systems empfangen werden. Das Rechensystem 21 kann dann einen Optimierungsalgorithmus für mehrere der technischen Komponenten 31 des Automatisierungssystems durchführen.

Im Rahmen dieses Optimierungsalgorithmus kann beispielsweise bestimmt werden, welche der technischen Komponenten zu welchem Zeitpunkt aufgrund ihres Verschleißes idealerweise eingesetzt werden, beispielsweise um den Energieeinsatz zum Betrieb des Automatisierungssystems zu minimieren. Die entsprechende Information wird über die Kommunikationsverbindung 26 an den Leitrechner 34 der Komponenteneinheit 30 übertragen. Grundsätzlich kann das Ergebnis des Optimierungsalgorithmus automatisiert den lokalen Steuereinheiten 33 der technischen Komponente 31 zugeführt werden. Alternativ kann ein Nutzer (Operator), der den Leitrechner 34 bedient, die letzte Entscheidung darüber erhalten, ob er die Ergebnisse des Optimierungsalgorithmus umsetzt oder nicht.

Mit der beschriebenen Vorrichtung ist es möglich, den Verschleiß der technischen Komponente "online" zu schätzen, wobei das Ergebnis der Schätzung durch mehrere Parameter ausgedrückt ist. Die Schätzung braucht dabei lediglich in einer Recheneinheit, nämlich der Recheneinheit 14 der Kommunikationsvorrichtung 10, welche zwischen der oder den technischen Komponenten des Automatisierungssystems und einem Rechensystem 21 in einem Cloud Computing-System 20 angeordnet ist, vorgenommen werden. Hierdurch ist es nicht erforderlich, die Schätzung der Betriebskurven einerseits in den technischen Komponenten selbst und andererseits in dem Rechensystem des Cloud Computing-Systems separat vorzunehmen, um einerseits in den technischen Komponenten einen tatsächlichen Zustand der technischen Komponente durch die Betriebskurven abzubilden und andererseits es dem Rechensystem zu ermöglichen, einen Optimierungsalgorithmus durchzuführen. Darüber hinaus weist das Vorgehen den Vorteil auf, dass dieses in Echtzeit durchführbar ist.

Fig. 2 zeigt eine schematische Darstellung des Ablaufs des erfindungsgemäßen Verfahrens. In einem ersten Schritt S1 wird, in vorgegebenen Zeitabständen, ein jeweiliges Signal von der technischen Komponente an einer Empfangsschnittstelle der Kommunikationsvorrichtung empfangen, wobei ein jeweiliges Signal Messdaten umfasst, die den aktuellen Zustand der technischen Komponente charakterisieren. In einem Schritt S2 erfolgt ein Speichern der in den jeweiligen Signalen enthaltenen Messdaten in einem Datenspeicher. In Schritt S3 erfolgt das Ermitteln eines oder mehrerer Parameter einer zur Steuerung der technischen Komponente geeigneten Betriebskurve aus den in dem Datenspeicher gespeicherten Messdaten und einem vorab bestimmten, datengetriebenen Modell der technischen Komponente, wobei die Betriebskurve den aktuellen technischen Zustand der technischen Komponente wiederspiegelt. In Schritt S4 erfolgt das Übertragen des oder der Parameter an die technische Komponente zu Steuerungszwecken und an das Rechensystem zur Durchführung eines Optimierungsalgorithmus für mehrere der technischen Komponenten des Automatisierungssystems.

## Patentansprüche

1. Kommunikationsvorrichtung für ein Automatisierungssystem, das ein Rechensystem (21) in einem Cloud Computing-System (20) und zumindest eine technische Komponente (31) in einem Kernnetzwerk des Automatisierungssystems umfasst, wobei die Kommunikationsvorrichtung dazu eingerichtet ist, Daten von der technischen Komponente (31) an einer ersten Schnittstelle (11), die an einen Feldbus (35) des Kernnetzes angeschlossen ist, zu empfangen, zu konvertieren und die konvertierten Daten über eine zweite Schnittstelle (12), die auf einem generischen Netzwerkprotokoll basiert, an das Rechensystem (21) weiterzuleiten, und wobei die Kommunikationsvorrichtung (10) folgendes umfasst:
- eine Empfangsschnittstelle (15), die dazu eingerichtet ist, in vorgegebenen Zeitabständen ein jeweiliges Signal von der technischen Komponente (31) zu empfangen, wobei ein jeweiliges Signal Messdaten umfasst, die den aktuellen Zustand der technischen Komponente (31) charakterisieren;
- einen Datenspeicher (13), der dazu eingerichtet ist, die in den jeweiligen Signalen enthaltenen Messdaten in dem Datenspeicher (13) zu speichern;
- eine Recheneinheit (14), die dazu eingerichtet ist, aus den in dem Datenspeicher (13) gespeicherten Messdaten und einem vorab bestimmten, datengetriebenen Modell der technischen Komponente (31) einen oder mehrere Parameter (pᵢ) einer zur Steuerung der technischen Komponente (31) geeigneten Betriebskurve, die den aktuellen technischen Zustand der technischen Komponente (31) wiederspiegelt, zu ermitteln;
- eine Kommunikationseinheit (16), die dazu eingerichtet ist, den oder die Parameter (pᵢ) über den Feldbus an die technische Komponente (31) zu Steuerungszwecken und an das Rechensystem (21) zur Durchführung eines Optimierungsalgorithmus für mehrere der technischen Komponenten (31) des Automatisierungssystems zu übertragen.

2. Kommunikationsvorrichtung nach Anspruch 1, bei der das Signal während des Betriebs der technischen Komponente (31) zu einem Zeitpunkt erfasste Messdaten umfasst.

3. Kommunikationsvorrichtung nach Anspruch 1 oder 2, bei der der Datenspeicher (13) dazu eingerichtet ist, die Messdaten von Signalen eines vorgegebenen Zeitraums zu speichern.

4. Kommunikationsvorrichtung nach einem der vorhergehenden Ansprüche, bei der die Recheneinheit (14) dazu eingerichtet ist, den oder die Parameter (pᵢ) aus einer Vielzahl von Messdaten zu ermitteln, die in dem vorgegebenen Zeitraum erfasst wurden.

5. Kommunikationsvorrichtung nach einem der vorhergehenden Ansprüche, bei der der oder die Parameter (pᵢ) Parameter eines Polynoms zur Beschreibung der Betriebskurve der technischen Komponente (31) sind.

6. Kommunikationsvorrichtung nach einem der vorhergehenden Ansprüche, bei der diese ein Edge-Device ist.

7. Kommunikationsvorrichtung nach einem der vorhergehenden Ansprüche, bei der die zweite Schnittstelle (12) Ethernetbasiert ist.

8. Kommunikationsverbindung nach einem der vorhergehenden Ansprüche, bei der die Empfangsschnittstelle (15) der ersten Schnittstelle (11) entspricht.

9. Verfahren zum Betreiben einer Kommunikationsvorrichtung für ein Automatisierungssystem, das ein Rechensystem (21) in einem Cloud Computing-System (20) und zumindest eine technische Komponente (31) in einem Kernnetzwerk des Automatisierungssystems umfasst, wobei die Kommunikationsvorrichtung dazu eingerichtet ist, Daten von der technischen Komponente (31) an einer ersten Schnittstelle (11), die an einen Feldbus (35) des Kernnetzes angeschlossen ist, zu empfangen, zu konvertieren und die konvertierten Daten über eine zweite Schnittstelle (12), die auf einem generischen Netzwerkprotokoll basiert, an das Rechensystem (21) weiterzuleiten, und wobei das Verfahren die folgenden Schritte umfasst:
- Empfangen, in vorgegebenen Zeitabständen, eines jeweiligen Signals von der technischen Komponente (31) an einer Empfangsschnittstelle (15), wobei ein jeweiliges Signal Messdaten umfasst, die den aktuellen Zustand der technischen Komponente (31) charakterisieren;
- Speichern der in den jeweiligen Signalen enthaltenen Messdaten in einem Datenspeicher (13);
- Ermitteln eines oder mehrerer Parameter (pᵢ) einer zur Steuerung der technischen Komponente (31) geeigneten Betriebskurve aus den in dem Datenspeicher (13) gespeicherten Messdaten und einem vorab bestimmten, datengetriebenen Modell der technischen Komponente (31), wobei die Betriebskurve den aktuellen technischen Zustand der technischen Komponente (31) wiederspiegelt;
- Übertragen des oder der Parameter (pᵢ) an die technische Komponente (31) zu Steuerungszwecken und an das Rechensystem (21) zur Durchführung eines Optimierungsalgorithmus für mehrere der technischen Komponenten (31)# des Automatisierungssystems.

10. Computerprogrammprodukt, das direkt in den internen Speicher eines digitalen Rechners geladen werden kann und Softwarecodeabschnitte umfasst, mit denen die Schritte gemäß einem der vorhergehenden Ansprüche ausgeführt werden, wenn das Produkt auf einem Rechner läuft.
